# EUROPEAN PATENT SPECIFICATION

(11) **EP 3 838 633 B1**
(45) Date of publication and mention of the grant of the patent: **22.11.2023**
(21) Application number: 20214789.8
(22) Date of filing: 17.12.2020
(51) Int. Cl.: B60D 1/14, B60D 1/167

(54) **TRAILER**
ANHÄNGER
REMORQUE

(30) Priority: 20.12.2019 BE 201905952
(43) Date of publication of application: 23.06.2021
(73) Proprietor: BCW NV, 2590 Berlaar (BE)
(72) Inventor: Van der Veken, Jan, 2590 Berlaar (BE)
(74) Representative: Kamphuis, Albertus Johannes

(56) References cited:
- DE-A1- 2 614 701
- DE-A1- 19 905 676
- DE-C- 471 853
- US-A- 4 391 562

## Description

The invention relates to a a trailer with features according to claim 1. More particularly, the invention relates to smaller trailers for use on public roads, of category O1, i.e. unbraked trailers with a maximum permissible mass of 750 kg or less or of category 02, i.e. braked trailers with a maximum permissible mass of 3500 kg or less.

Such trailers have a drawbar that is fixedly connected to the chassis of the trailer and they are normally used behind passenger cars, vans and small trucks and are connected to the towing vehicle by means of a ball coupling with a ball diameter of 50 mm or by means of a DIN eye with a diameter of 40 mm.

Although legal standards exist for the height of the coupling to a towing vehicle, the actual height of this coupling, even within the standards, can easily vary by 10 cm and in practice even more, for example due to non-optimal loading of the towing vehicle or due to adjustments compared to a standard version of the towing vehicle.

This often results in a trailer being towed behind a towing vehicle in a non-optimal condition, wherein the chassis of the trailer does not have the intended orientation, i.e., normally, a horizontal orientation.

This can lead to overloading of the coupling on the vehicle or of parts of the trailer and may yield an increased risk of parts of the trailer touching the road, for example in the case of vertical level differences in the road. This also yields an increased risk of less-than-optimal driving behaviour. It is also often inconvenient in use to have a non-horizontal loading floor.

In particular, but not only, this leads to problems for trailers with an overrun brake, because a sliding piece of the overrun brake may endure a higher than anticipated friction due to higher vertical forces than anticipated, whereby the braking effect is reduced.

In particular, but not only, this leads to problems with so-called tandem axles and tridem axles, which have two or three wheels on either side. After all, these are designed to be supported by several wheels, such that, when the height of the coupling on the towing vehicle does not correspond to the height of the coupling on the trailer, one of the wheels carries little or no load and another wheel carries all or almost all of the load such that overloading of that wheel and the corresponding suspension occurs. Of course, this also has negative consequences for tire wear.

In such a case, the connection of the drawbar with the chassis can easily become overloaded, because greater forces than anticipated are exerted thereupon.

It is known to make the height of the coupling of a trailer adjustable by making the drawbar itself pivotally adjustable at two points around horizontal pivot axes. However, due to the high forces that a drawbar must be able to withstand, both horizontally and vertically, it is very expensive to make it sufficiently strong. The document US 4 391 562 A discloses a corresponding trailer.

The invention aims to provide a solution for the aforementioned and other drawbacks and to this end provides a trailer comprising a drawbar and a chassis, wherein the chassis extends in a longitudinal direction, i.e. from the rear to the front, wherein the drawbar is a rigid drawbar, hence without a hinge mechanism to allow part of the drawbar to be adjusted with respect to another part of the drawbar, wherein the drawbar has a front side and a rear side, wherein the drawbar extends from its rear side to its front side in a first direction, wherein the drawbar and the chassis are adapted to immovably but releasably attach the drawbar to the chassis in two or more different attachment positions, wherein in said different attachment positions, the angle between the first direction and the longitudinal direction, viewed in horizontal side view, is different.

For the sake of completeness, it is noted that the front side of the drawbar is the end of the drawbar where a coupling is arranged on the drawbar to couple the trailer to a towing vehicle and that the rear side of the drawbar is the opposite end or are the opposite ends.

In general, 'front' and 'rear' in the discussion of the trailer means that, in normal use of the trailer, 'front' is oriented towards the towing vehicle and 'rear indicates the opposite orientation.

Of course, said first direction is easy to determine with a drawbar which is straight in side view. With a drawbar that is not straight in side view, this first direction is determined by the mean direction of a line from the rear side to the front side of the drawbar.

Since most trailers are designed to use the chassis in a horizontal orientation, the longitudinal direction may alternatively be defined as a direction that extends horizontally in normal design-true use of the trailer.

In the case of trailers having at least two wheels placed behind one another on each of the two sides, each rotating around its own horizontal axis, the longitudinal direction may alternatively be defined as the direction extending from rear to front in the geometric plane defined by said axles of the wheels.

The invention has the advantage that the height of the coupling of the trailer can be adjusted in a simple and inexpensive manner to the height of the coupling on the towing vehicle. As a result, damage and accelerated wear can be prevented and a better road behaviour and braking operation can be obtained.

Because the adjustability takes place at the connection between the drawbar and the chassis, the full length of the drawbar is available to bridge the desired height difference, such that the deviation with respect to a horizontal orientation of the front side of the drawbar, and hence from a coupling that is located there, is very limited and therefore has no consequences for the safe operation of the coupling and the overrun brake.

According to the invention, the drawbar and the chassis are adapted to attach the drawbar immovably and releasably to the chassis in the two or more attachment positions in that the drawbar and the chassis are adapted to be attached to one another on a first attachment point and on a second attachment point, wherein the first attachment point is closer to the front side of the drawbar than the second attachment point, wherein the drawbar and the chassis at the location of the first attachment point or at the location of the second attachment point are provided with coupling members for the releasable attachment of the drawbar to the chassis at the location of the first attachment point or the second attachment point in two or more vertical positions with respect to one another.

According to the invention, the drawbar and the chassis at the location of the second attachment point are provided with said coupling members, wherein the drawbar and the chassis at the location of the first attachment point are adapted to be attached to one another at a fixed height, in other words a fixed vertical location with respect to one another.

According to the invention, the drawbar or the chassis at the location of the first attachment point is provided with a surface that is convex, viewed in a vertical section in the longitudinal direction, wherein the drawbar or chassis at the location of the first attachment point is provided with a surface that is concave, as viewed in a vertical section in the longitudinal direction, wherein the chassis is provided with the concave surface and the drawbar is provided with the convex surface or vice versa, wherein the convex surface and the concave surface are facing each other and are complementary in shape.

This makes it possible to obtain a well-fitting connection between the drawbar and the chassis in any attachment position, while also reducing or preventing stress concentrations that could lead to breakage.

Preferably, the convex surface is directed upwards and the concave surface is directed downwards.

Preferably, the convex surface and the concave surface are provided with passages for a bolt to thereby connect the drawbar with the chassis at the location of the convex surface and the concave surface.

Preferably, the convex surface and the concave surface have a radius of curvature, viewed in said cross-section, which is at least 3 cm and preferably at least 5 cm and which is at most 50 cm, and preferably at most 35 cm.

Preferably, the convex surface is formed by the drawbar or the chassis or by an adapter arranged on or under the drawbar or the chassis, and more preferably both the convex surface and the concave surface are formed by the drawbar and the chassis.

In a further preferred embodiment, said coupling members comprise a first coupling member and a complementary second coupling member, wherein the first coupling member is provided with one or more first passages and with one or more second passages, wherein the one or more first passages and the one or more second passages are arranged at a first vertical distance from one another, wherein the second coupling member is provided with one or more third passages, wherein the one or more first passages and the one or more second passages and the one or more third passages are adapted to pass a bolt, wherein in a first mutual orientation of the first coupling member and the second coupling member the one or more first passages and one or more of the third passages are aligned with one another, but the one or more second passages are not aligned with a third passage, wherein in a second mutual orientation of the first coupling member and the second coupling member the one or more second passages and one or more of the third passages are aligned with one another, but the one or more first passages are not aligned with a third passage, wherein the first coupling member is fixedly attached to the drawbar and the second coupling member is fixedly attached to the chassis or vice versa.

This is a practical way of achieving an attachment of the drawbar to the chassis in the two attachment positions mentioned.

In a preferred embodiment, the second coupling member is provided with at least two said third passages which are arranged at a second vertical distance from one another, wherein the second vertical distance is different from the first vertical distance.

Since the desired attachment positions differ relatively little from one another, there is little room in the coupling members to realize all adjustment possibilities by only a plurality of third passages. In this case, there would be too little material left between the third passages to enable a firm attachment. The preferred embodiment allows, due to the difference between the first and second vertical distance, a large number of closely spaced attachment positions while still allowing the third passages to be spaced sufficiently far apart to have sufficient material around them and thereby obtain a firm attachment.

In a preferred embodiment, the first coupling member is attached to the drawbar and the second coupling member is attached to the chassis, wherein the one or more first passages and the one or more second passages and the one or more third passages are adapted to pass a bolt in a direction perpendicular to the longitudinal direction, wherein one of the coupling members is bifurcated and can be placed astride over the other coupling member in different vertical positions and can be attached to the other coupling member by means of a bolt passing through a third passage and a first passage or a second passage.

In this way, a strong, two-sided attachment is obtained in an easy manner.

In a preferred embodiment, in at least one of said attachment positions, the first direction is inclined upwards and in at least one of said attachment positions, it is inclined downwards.

In another preferred embodiment, the drawbar and the chassis are adapted to immovably but releasably attach the drawbar to the chassis in three or more different attachment positions, wherein, in at least one of the aforementioned attachment positions, the angle between the first direction and the longitudinal direction, viewed in horizontal side view, deviates less than 1.0° from 0.

The latter two embodiments have the advantage that the trailer can be adjusted to towing vehicles the coupling of which is higher than anticipated and to towing vehicles the coupling of which is lower than anticipated.

In a preferred embodiment, the distance between the first attachment point and the second attachment point, viewed in longitudinal direction, is at least 15 % of the distance between the front side and the rear side of the drawbar. Preferably, the distance between the first attachment point and the second attachment point is at least 20 % of the distance between the front side and the rear side of the drawbar.

As a result, different attachment positions with relatively small height differences at the front side of the drawbar can be obtained and the height of the front side of the drawbar can thus be set accurately. At a very small distance between the first attachment point and the second attachment point, a small variation in the attachment position at the second attachment point could lead, due to the leverage effect of the drawbar, to a large variation in the height of the front side of the drawbar.

In a preferred embodiment, the trailer has exactly one wheel on each side or exactly two or exactly three wheels placed one behind the other, wherein these wheels support the chassis, wherein, in the case the trailer has two or three wheels on each side, these wheels have a centre-to-centre distance of 100 cm or less. These wheels preferably have the same diameter.

In a preferred embodiment, the trailer has at least two wheels placed one behind the other on each of its two sides, wherein said wheels each are rotatable about its own axis.

In a preferred embodiment, the trailer has two or more wheels supporting the chassis and preferably two or more wheels supporting the chassis on each of both sides, wherein all wheels supporting the chassis are attached to the chassis. Preferably, the attachment to the chassis of all wheels supporting the chassis is independent of the aforementioned attachment position.

Preferably, all wheels attached to the chassis have an axis of rotation that has a fixed direction with respect to the chassis, wherein this direction is perpendicular to the longitudinal direction.

In a preferred embodiment, the drawbar is V-shaped or Y-shaped or Ψ-shaped with two or more legs spreading towards the rear side of the drawbar, wherein each of the legs is provided with said coupling members.

In a preferred embodiment, the trailer has a maximum permissible mass (GVM) of ≤ 3500 kg.

In a preferred embodiment, the trailer is a trailer of category O1 or O2. This means, among other things, that the trailer is suitable and legally permitted for use behind a towing vehicle at a speed of 70 km/h or more.

In a preferred embodiment, the angle between the first direction in a first attachment position, in which the front side of the drawbar has the highest possible position, and the first direction in a second attachment position, in which the front side of the drawbar has the lowest possible position, is at least 2.5°. Preferably, this angle is at least 5.0°.

In this way, with a normal drawbar length, a height adjustability of the front side of the drawbar can be obtained which approximates or corresponds to the height variation that occurs in practice with the couplings on towing vehicles.

In a preferred embodiment, the angle between the first direction in an attachment position and the first direction in the immediately following or preceding attachment position is at least 0.5° and at most 1.5°. In other words, this concerns the step size of the adjustment of the angle of the drawbar. If this step size is too small, there is only a limited range over which the angle of the drawbar can be adjusted. When this step size is too large, the accuracy of the possibility for adjustment is too small for optimal use.

In order to clarify the invention, a preferred embodiment of a trailer according to the invention is described below, with reference to the following figures, in which:
Figure 1 schematically and in perspective shows a trailer according to the invention;
Figure 2 schematically shows the trailer of Figure 1 in side view;
Figure 3 schematically and in perspective shows some parts of the trailer of Figure 1 in an exploded view;
Figures 4 to 6 show a part of a section according to IV-IV of the trailer of Figure 1 in enlargement in different conditions of use;
Figure 7 shows part of Figure 4 on a larger scale and in an exploded state;
Figures 8 and 9 show alternative embodiments of the portion shown in Figure 7; and
Figure 10 is a perspective view of a part of the trailer.

The trailer 1 shown in the figures is a tandem-axle with two wheels 2 on both sides, which are rotatable on mutually parallel horizontal axes. The trailer 1 has a chassis 3, on which in the figures no superstructure is placed, but on which any superstructure can be placed, depending on the desired function of the trailer 1.

The chassis 3 comprises, in this example, two support beams 4 extending horizontally in a longitudinal direction L and a cross beam 5 in the form of a C-profile which connects the two support beams 4 at their front side.

The trailer further has a V-shaped drawbar 6 with two straight and rigid legs 7 that flare towards the rear. At the front side, the drawbar 6 is provided with a ball coupling 8 with an overrun brake. The ball coupling 8 is located at a distance A of 150 cm from the front side of the chassis 3. The drawbar 6 is immovably attached to the chassis 3.

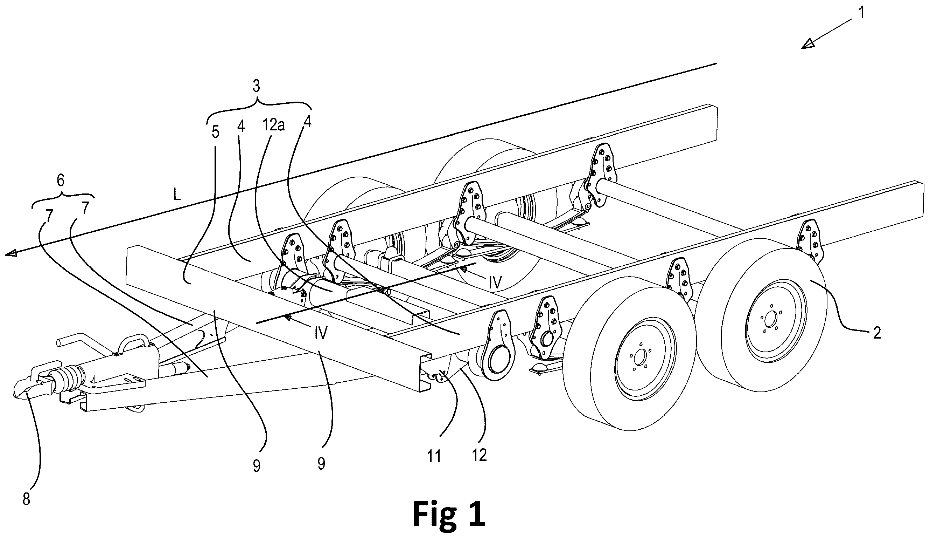

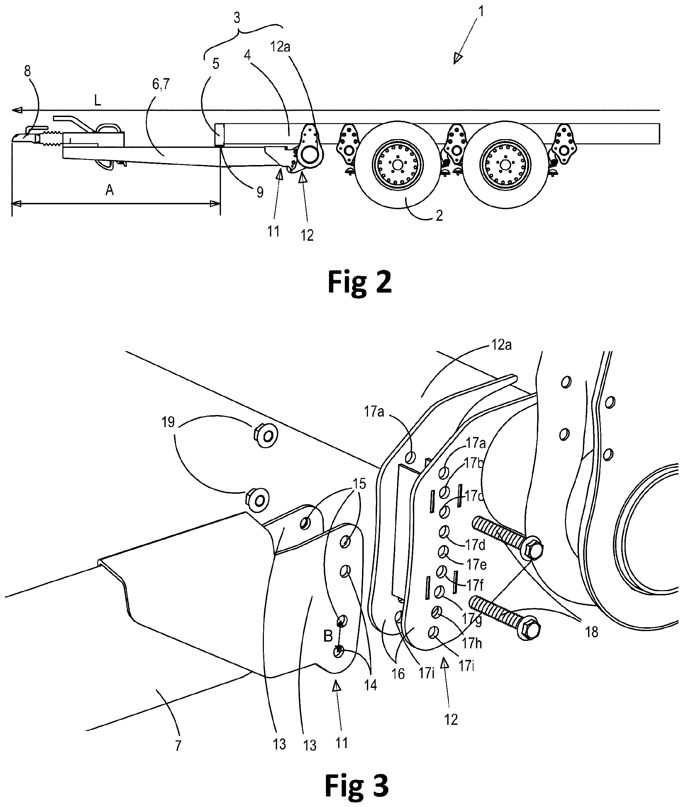

Viewed in side view, the drawbar is straight and, viewed from its rear side to its front side, extends in a first direction K. This first direction K runs horizontally in Figures 1, 2 and 4.

The attachment of the drawbar 6 to the chassis 3 is adjustable in order to be able to adapt the height of the ball coupling 8 to a anticipated towing vehicle. This is achieved as follows.

The legs 7 of the drawbar 6 are attached at a first attachment point 9 between their front side and rear side, by means of first bolts 10, to the cross beam 5 of the chassis 3, at a fixed height below the cross beam. The first attachment point 9 is located at a distance from the rear side of the legs 7, which is approximately 33 % of the length of the legs.

Furthermore, the two legs 7 of the drawbar 6 are each provided at their rear side with a first coupling member 11. The chassis 3 is, at some distance from its front side, provided with second coupling members 12. The second coupling members are connected by means of a stiffening tube 12a that is attached to the support beams 4, to the rest of the chassis 3. By means of the first coupling members 11 and the second coupling members 12, the rear sides of the legs 7 of the drawbar 6 are attached to the chassis 3 at a second attachment point, wherein the first coupling members 11 and the second coupling members 12 can be attached to one another at various relative positions.

The first coupling members 11 are mainly formed by two vertically positioned first plate-shaped elements 13 which are spaced from one another. The first coupling members 11 are hereby forked.

The first plate-shaped elements 13 are each provided with four passages for bolts, namely two first passages 14 and two second passages 15. The first passages 14 have a distance B to the nearest second passages 15. The first passages 14 and the second passages 15 are mutually identical, only their placement in the first plate-shaped elements 13 is different.

The second coupling members 12 are mainly formed by two vertically positioned second plate-shaped elements 16. The second plate-shaped elements 16 are also spaced apart such that the first plate-shaped elements 13 fit over them with only a small clearance.

The second plate-shaped elements 16 are provided with nine third passages 17 for second bolts, which are arranged at a mutual distance 0.5 * B. The third passages are generally referred to with reference 17 and the individual third passages are referred to with references 17a to 17i. Through the first passages 14 or the second passages 15 and two of the third passages 17, second bolts 18 are arranged and nuts 19 are provided to firmly attach the first coupling members 11 and the second coupling members 12 to one another.

Seven different attachment positions are possible in which the first passages 14 or the second passages 15 are aligned with third passages 17, such that the second bolts 18 can be arranged through the first passages 14 or the second passages 15 and the third passages 17.

This results in seven different possible attachment positions of the drawbar 6 with respect to the chassis 3, which are distinguished by the angle α that is formed by the first direction K with the longitudinal direction L, and therefore also seven different heights of the ball coupling 8.

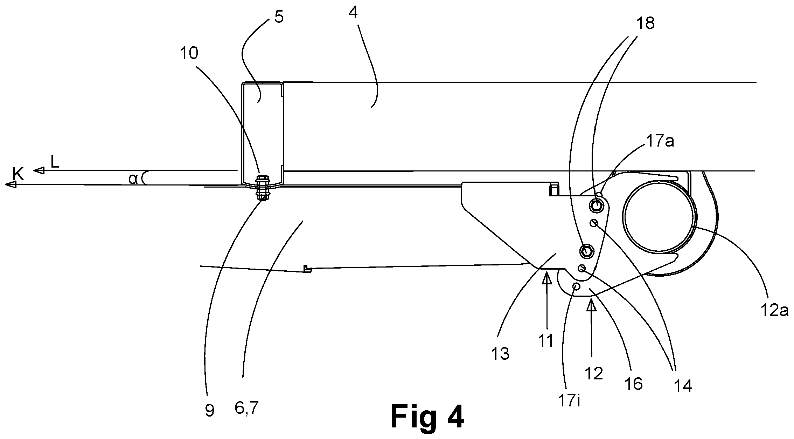

In a middle attachment position, as shown in Figure 4, the second passages 15 are aligned with third passages 17b and 17f. In this attachment position, the first direction K form an angle α of 0° with the longitudinal direction L.

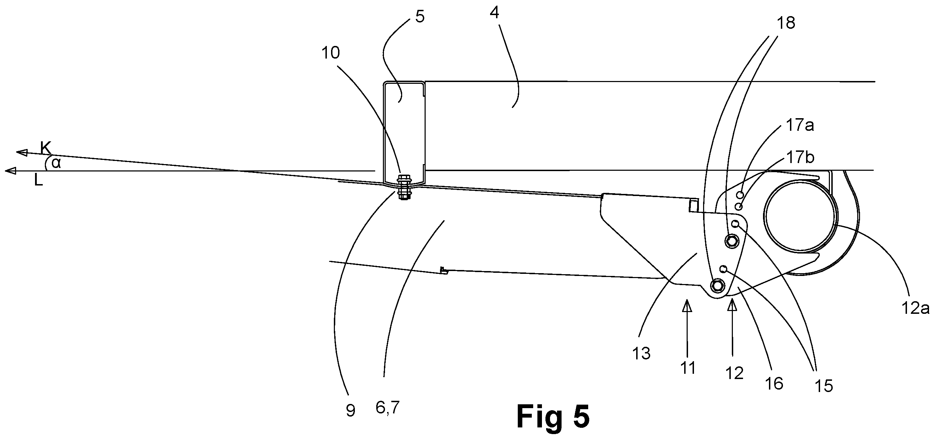

In a lowest position of attachment of the first coupling member 11 with respect to the second coupling member 12, as shown in Figure 5, the first passages 14 are aligned with third passages 17e and 17i. In this attachment position, the first direction K forms an angle α of 3° with the longitudinal direction L and the first direction K is inclined upwards. As a result, the ball coupling 8 has its highest position in this attachment position.

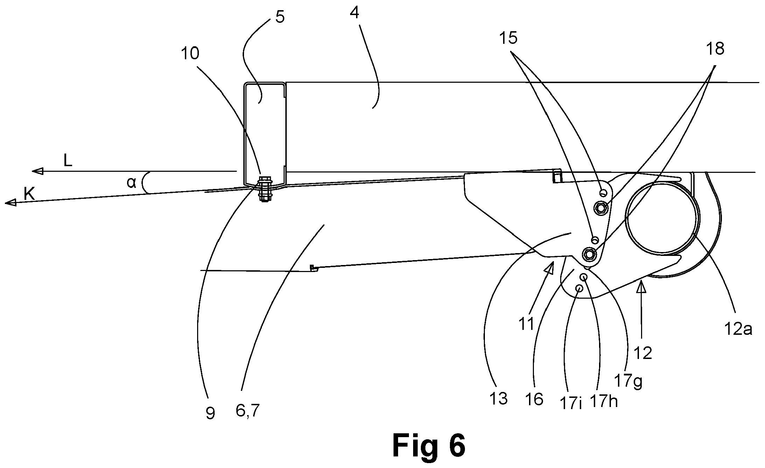

In a highest securing position of the first coupling member 11 with respect to the second coupling member 12, as shown in Figure 6, the first passages 14 are aligned with third passages 17a and 17e. In this attachment position, the first direction K forms an angle α of 3° with the longitudinal direction L and the first direction K is inclined downward. As a result, the ball coupling 8 has its lowest position in this attachment position. The difference in the angle α between the lowest and the highest attachment position is therefore 6°.

In said lowest attachment position of the first coupling member 11 with respect to the second coupling member 12, the ball coupling 8 is located 7.9 cm higher than the position of the ball coupling 8 in the middle attachment position. Similarly, in the highest attachment position of the first coupling member 11 with respect to the second coupling member 12, the ball coupling 8 is located at a position 7.9 cm lower than the position of the ball coupling 8 in the middle attachment position.

Furthermore, the following intermediate attachment positions are possible, which are summarized in the table below and which are not shown in a figure.

| Use of the first passages 14 or the second passages 15 on first coupling member 11 | Which third passages 17 used: | Angle α formed: |
|---|---|---|
| second passages 15 | 17a and 17e | 2⁰ downwards |
| first passages 14 | 17c and 17g | 1⁰ downwards |
| first passages 14 | 17d and 17h | 1⁰ upwards |
| second passages 15 | 17c and 17g | 2⁰ upwards |

Attachment positions with an angle α of an even greater absolute value are possible, based on the first, second and third passages (14,15,17), but in that case, the first plate-shaped elements 13 extend above or below the first plate-shaped elements 16, whereby lateral forces may not be properly transmitted, such that these attachment positions are undesirable, and moreover unnecessary to obtain the desired variation in height of the ball coupling 8.

Note that the connection between the first coupling member 11 and the second coupling member 12 can be loosened by loosening the nuts 19 of the second bolts 18 such that the second bolts 18 can be removed such that the first coupling member 11 and the second coupling member 12 can be reattached in another attachment position.

It is desirable to first loosen the first bolts 10 to some extent, and later retighten them.

It should also be noted that adjusting the drawbar angle α is not so quickly and easy that the trailer 1 can be connected in a practical manner several times a day behind another towing vehicle, with a different coupling height. However, this is also not necessary, because, normally, most trailers are usually used for a long time and exclusively with the same towing vehicle, such that the adjustment of the drawbar angle α is rarely necessary.

This should therefore be done with due care by a qualified technician, as of course, it would be very undesirable if the second bolts 18 were to loosen during use.

In order to ensure a good connection between the chassis 3 and the drawbar 6, in all possible attachment positions of the drawbar 6, the cross beam 5 is implemented on its underside at the location of the first attachment points 9 with a first lowered part 20, such that a convex surface 21 is formed at the bottom of the cross beam 5.

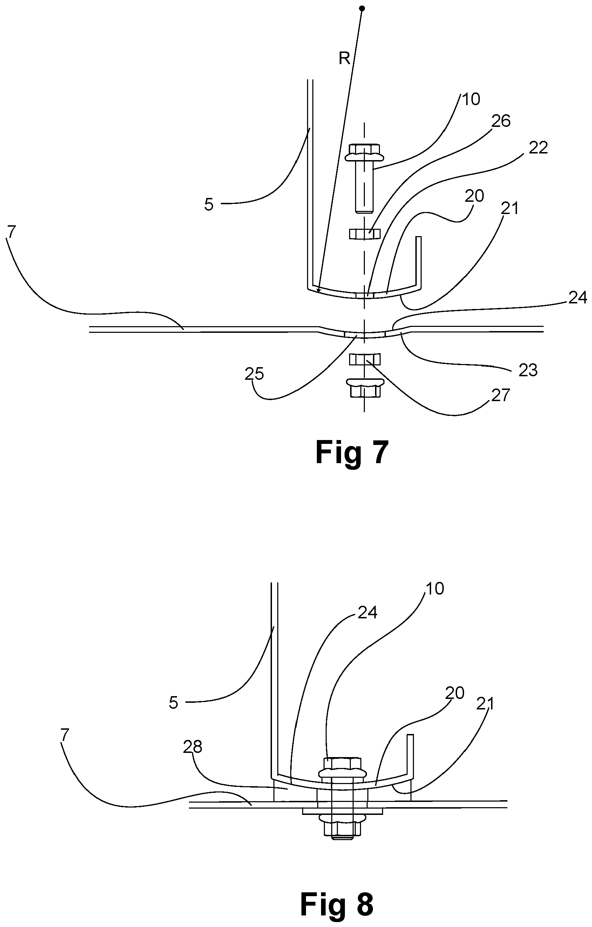

This convex surface 21, in cross-section along the longitudinal direction L, as shown in Figure 7, is formed as a circular segment extending over about 25°, with a radius of curvature R of 25 cm.

In this first lowered portion, a first passage 22 for a first bolt 10 is arranged.

Furthermore, the top side of the legs 7 of the drawbar 6 is implemented with a second lowered portion 23 such that a concave surface 24 is formed on the top side of the legs 7. The concave surface 24 has a shape and size that is complementary to the convex surface 21. In this second lowered portion 23, a second passage 25 for a first bolt 10 is arranged.

The drawbar 6 and the cross beam 5 are attached to one another by means of the first bolts 10, wherein an upper ring 26 is used which is convex at its underside, and a lower ring 27 which is concave at its top side such that these rings 26, 27 fit snugly against the first lowered portion 20 and the second lowered portion 23, in all possible attachment positions.

The embodiment shown in Figure 8 differs from the embodiment according to Figure 7 mainly in that the legs 7 of the drawbar 6 are not provided with the second lowered portion 23. Instead, the legs 7 are provided with an adapter 28 having a concave surface 24 at its top side.

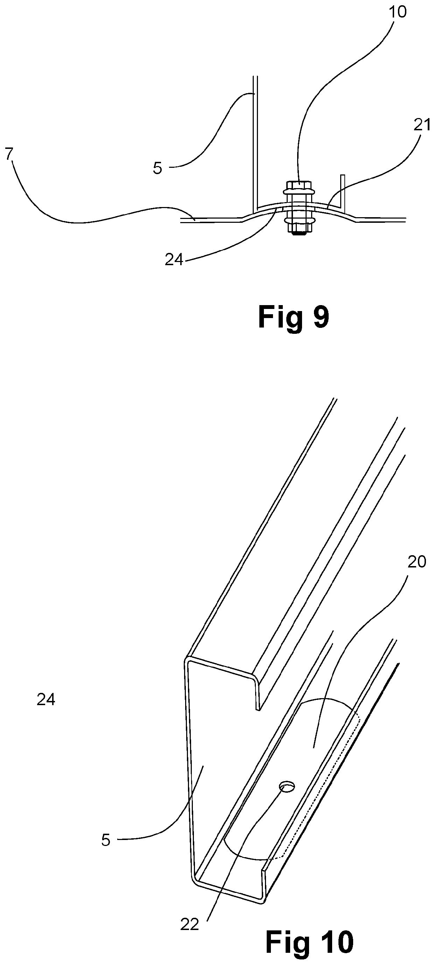

The embodiment shown in Figure 9 differs from the embodiment according to Figure 7 mainly in that the bottom wall of the transverse beam 5 is implemented with a concave surface 24 and the legs 7 of the drawbar 6 are implemented at their top side with a convex surface.

## Claims

1. Trailer (1) comprising a drawbar (6) and a chassis (3), wherein the chassis (3) extends in a longitudinal direction (L), wherein the drawbar (6) is a rigid drawbar, wherein the drawbar (6) has a front side and a rear side, wherein the drawbar (6) extends from its rear side to its front side in a first direction (K), wherein the drawbar (6) and the chassis (3) are adapted to immovably and releasably attach the drawbar (6) to the chassis (3) in two or more different attachment positions, wherein in said different attachment positions, the angle (α) between the first direction (K) and the longitudinal direction (L), viewed in horizontal side view, is different, wherein the drawbar (6) and the chassis (3) are adapted to attach the drawbar (6) immovably and releasably to the chassis (3) in the two or more attachment positions in that the drawbar (6) and the chassis (3) are adapted to be attached to one another on a first attachment point (9) and on a second attachment point, wherein the first attachment point (9) is closer to the front side of the drawbar than the second attachment point, wherein the drawbar (6) and the chassis (3) at the location of the second attachment point are provided with coupling members (11,12) for the releasable attachment of the drawbar (6) to the chassis (3) at the location of the second attachment point in two or more vertical positions, wherein the drawbar (6) and the chassis (3) at the location of the first attachment point (9) are adapted to be attached to one another in a fixed vertical position, **characterized in that** the drawbar (6) or the chassis (3) at the location of the first attachment point (9) is provided with a surface (21) which is convex, viewed in a vertical section in the longitudinal direction (L), wherein the chassis (3) or the drawbar (6) at the location of the first attachment point (9) is provided with a surface (24) that is concave, viewed in a vertical section in the longitudinal direction (L), wherein the chassis (3) is provided with the concave surface (24) and the drawbar (6) is provided with the convex surface (21) or vice versa, wherein the convex surface (21) and the concave surface (24) are facing one another and are complementary in shape.

2. Trailer (1) according to claim 1, wherein the convex surface (21) is directed upwards and the concave surface (24) is directed downwards or vice versa, wherein the convex surface (21) and the concave surface (24) are provided with passages for a bolt (10) to thereby connect the drawbar (6) with the chassis (3) at the location of the convex surface (21) and the concave surface (24).

3. Trailer (1) according to claim 1 or 2, wherein the convex surface (21) and the concave surface (24) have a radius of curvature (R), viewed in said cross-section, which is at least 3 cm and which is at most 50 cm.

4. Trailer (2) according to any one of the previous claims , wherein the convex surface (21) and the concave surface (24) are formed by the drawbar (6) or by the chassis (3) or by one or more adapters (28) arranged on or under the drawbar (6) or chassis (3).

5. Trailer (1) according to any one of the preceding claims, wherein said coupling members (11, 12) comprise a first coupling member (11) and comprise a complementary second coupling member (12), wherein the first coupling member (11) is provided with one or more first passages (14) and with one or more second passages (15), wherein the one or more first passages (14) and the one or more second passages (15) are arranged at a first vertical distance (B) from one another, wherein the second coupling member (12) is provided with one or more third passages (17), wherein the one or more first passages (14) and the one or more second passages (15) and the one or more third passages (17) are adapted to pass a bolt (18), wherein in a first mutual orientation of the first coupling member (11) and the second coupling member (12) the one or more first passages (14) and one or more of the third passages (17) are aligned with one another, but the one or more second passages (15) are not aligned with a third passage (17), wherein in a second mutual orientation of the first coupling member (11) and the second coupling member (12) the one or more second passages (15) and one or more of the third passages (17) are aligned with one another but the one or more first passages (14) are not aligned with a third passage (17), wherein the first coupling member (11) is attached to the drawbar (6) and the second coupling member (12) is attached to the chassis (3) or vice versa.

6. Trailer (1) according to claim 5, wherein the second coupling member (12) is provided with at least two said third passages (17) which are arranged at a second vertical distance from one another, wherein the second vertical distance (0.5 * B) is half of the first vertical distance (B).

7. Trailer (1) according to claim 5 or 6, wherein the first coupling member (11) is attached to the drawbar (6) and the second coupling member (12) is attached to the chassis (3), wherein the one or more first passages (14) and the one or more second passages (15) and the one or more third passages (17) are adapted to pass a bolt (18) in a direction perpendicular to the longitudinal direction (L), wherein one of the coupling members (11) is bifurcated and can be placed astride over the other coupling member (12) in different vertical positions and can be attached to the other coupling member (12) by means of a bolt (18) passing through a third passage (17) and a first passage (14) or a second passage (15).

8. Trailer (1) according to any one of the preceding claims, wherein the distance between the first attachment point (9) and the second attachment point, viewed in longitudinal direction (L), is at least 15 % of the distance between the front side and the rear side of the drawbar (6).

9. Trailer (1) according to any one of the preceding claims, wherein the trailer (1) on each of its two sides has at least two wheels (2), placed one behind the other, which have an equal diameter.

10. Trailer (1) according to any one of the preceding claims, wherein the trailer (1) is provided with an overrun brake at the front side of the drawbar.

11. Trailer (1) according to any one of the preceding claims, wherein the trailer (1) has two or more wheels (2) that support the chassis (3), wherein all wheels (2) that support the chassis (3), are attached to the chassis (3), wherein the attachment to the chassis (3) of all the wheels (2) supporting the chassis (3) is independent of said attachment position.

12. Trailer (1) according to any one of the preceding claims, wherein the trailer (1) has two or more wheels (2) that support the chassis (3), wherein all wheels (2) that support the chassis (3) have a rotation axis that has a fixed direction with respect to the chassis (3), wherein this direction is perpendicular to the longitudinal direction (L).

13. Trailer according to any one of the preceding claims, wherein the trailer (1) is a trailer of category O1 or O2.

14. Trailer according to any one of the preceding claims, wherein the angle between the first direction (K) in an attachment position and the first direction (K) in the immediately following or preceding attachment position is at least 0.5° and is a most 1.5°.

## Patentansprüche

1. Anhänger (1), umfassend eine Deichsel (6) und ein Fahrgestell (3), wobei sich das Fahrgestell (3) in einer Längsrichtung (L) erstreckt, wobei die Deichsel (6) eine starre Deichsel ist, wobei die Deichsel (6) eine Vorderseite und eine Rückseite aufweist, wobei sich die Deichsel (6) von ihrer Rückseite zu ihrer Vorderseite in einer ersten Richtung (K) erstreckt, wobei die Deichsel (6) und das Fahrgestell (3) so angepasst sind, dass sie die Deichsel (6) an dem Fahrgestell (3) in zwei oder mehr verschiedenen Befestigungspositionen unbeweglich und lösbar befestigen, wobei in den verschiedenen Befestigungspositionen der Winkel (a) zwischen der ersten Richtung (K) und der Längsrichtung (L), in horizontaler Seitenansicht betrachtet, unterschiedlich ist, wobei die Deichsel (6) und das Fahrgestell (3) so angepasst sind, dass sie die Deichsel (6) unbeweglich und lösbar an dem Fahrgestell (3) in den zwei oder mehr Befestigungspositionen befestigen, indem die Deichsel (6) und das Fahrgestell (3) so angepasst sind, dass sie an einem ersten Befestigungspunkt (9) und an einem zweiten Befestigungspunkt aneinander befestigt werden, wobei der erste Befestigungspunkt (9) näher an der Vorderseite der Deichsel liegt als der zweite Befestigungspunkt, wobei die Deichsel (6) und das Fahrgestell (3) an der Position des zweiten Befestigungspunktes mit Kupplungselementen (11, 12) für die lösbare Befestigung der Deichsel (6) an dem Fahrgestell (3) an der Position des zweiten Befestigungspunktes in zwei oder mehr vertikalen Positionen bereitgestellt sind, wobei die Deichsel (6) und das Fahrgestell (3) an der Position des ersten Befestigungspunktes (9) so angepasst sind, dass sie in einer festen vertikalen Position aneinander befestigt werden,
**dadurch gekennzeichnet, dass**
die Deichsel (6) oder das Fahrgestell (3) an der Position des ersten Befestigungspunktes (9) mit einer Fläche (21) bereitgestellt ist, die konvex ist, in einem vertikalen Abschnitt in Längsrichtung (L) betrachtet, wobei das Fahrgestell (3) oder die Deichsel (6) an der Position des ersten Befestigungspunktes (9) mit einer Fläche (24) bereitgestellt ist, die konkav ist, in einem vertikalen Abschnitt in Längsrichtung (L) betrachtet, wobei das Fahrgestell (3) mit der konkaven Fläche (24) und die Deichsel (6) mit der konvexen Fläche (21) bereitgestellt ist oder umgekehrt, wobei die konvexe Fläche (21) und die konkave Fläche (24) einander zugewandt und komplementär geformt sind.

2. Anhänger (1) nach Anspruch 1, wobei die konvexe Fläche (21) nach oben und die konkave Fläche (24) nach unten oder umgekehrt gerichtet ist, wobei die konvexe Fläche (21) und die konkave Fläche (24) mit Durchgängen für einen Bolzen (10) bereitgestellt sind, um dadurch die Deichsel (6) mit dem Fahrgestell (3) an der Position der konvexen Fläche (21) und der konkaven Fläche (24) zu verbinden.

3. Anhänger (1) nach Anspruch 1 oder 2, wobei die konvexe Fläche (21) und die konkave Fläche (24) einen Krümmungsradius (R) aufweisen, der im Querschnitt betrachtet mindestens 3 cm und höchstens 50 cm beträgt.

4. Anhänger (2) nach einem der vorstehenden Ansprüche, wobei die konvexe Fläche (21) und die konkave Fläche (24) durch die Deichsel (6) oder durch das Fahrgestell (3) oder durch einen oder mehrere Adapter (28) gebildet werden, die an oder unter der Deichsel (6) oder dem Fahrgestell (3) angeordnet sind.

5. Anhänger (1) nach einem der vorhergehenden Ansprüche, wobei die Kupplungselemente (11, 12) ein erstes Kupplungselement (11) und ein komplementäres zweites Kupplungselement (12) umfassen, wobei das erste Kupplungselement (11) mit einem oder mehreren ersten Durchgängen (14) und mit einem oder mehreren zweiten Durchgängen (15) bereitgestellt ist, wobei der eine oder die mehreren ersten Durchgänge (14) und der eine oder die mehreren zweiten Durchgänge (15) in einem ersten vertikalen Abstand (B) voneinander angeordnet sind, wobei das zweite Kupplungselement (12) mit einem oder mehreren dritten Durchgängen (17) bereitgestellt ist, wobei der eine oder die mehreren ersten Durchgänge (14) und der eine oder die mehreren zweiten Durchgänge (15) und der eine oder die mehreren dritten Durchgänge (17) so angepasst sind, dass sie einen Bolzen (18) durchführen, wobei in einer ersten gegenseitigen Ausrichtung des ersten Kupplungselements (11) und des zweiten Kupplungselements (12) der eine oder die mehreren ersten Durchgänge (14) und einer oder mehrere der dritten Durchgänge (17) zueinander ausgerichtet sind, aber der eine oder die mehreren zweiten Durchgänge (15) nicht zu einem dritten Durchgang (17) ausgerichtet sind, wobei in einer zweiten gegenseitigen Ausrichtung des ersten Kupplungselements (11) und des zweiten Kupplungselements (12) der eine oder die mehreren zweiten Durchgänge (15) und der eine oder die mehreren dritten Durchgänge (17) miteinander ausgerichtet sind, aber der eine oder die mehreren ersten Durchgänge (14) nicht mit einem dritten Durchgang (17) ausgerichtet sind, wobei das erste Kupplungselement (11) an der Deichsel (6) befestigt ist und das zweite Kupplungselement (12) am Fahrgestell (3) befestigt ist oder umgekehrt.

6. Anhänger (1) nach Anspruch 5, wobei das zweite Kupplungselement (12) mit mindestens zwei der dritten Durchgänge (17) bereitgestellt ist, die in einem zweiten vertikalen Abstand voneinander angeordnet sind, wobei der zweite vertikale Abstand (0,5 * B) die Hälfte des ersten vertikalen Abstands (B) beträgt.

7. Anhänger (1) nach Anspruch 5 oder 6, wobei das erste Kupplungselement (11) an der Deichsel (6) und das zweite Kupplungselement (12) am Fahrgestell (3) befestigt ist, wobei der eine oder die mehreren ersten Durchgänge (14) und der eine oder die mehreren zweiten Durchgänge (15) und der eine oder die mehreren dritten Durchgänge (17) so angepasst sind, dass sie einen Bolzen (18) in einer Richtung senkrecht zur Längsrichtung (L) durchführen, wobei eines der Kupplungselemente (11) gegabelt ist und rittlings über dem anderen Kupplungselement (12) in verschiedenen vertikalen Positionen angeordnet sein kann und an dem anderen Kupplungselement (12) mittels eines Bolzens (18) befestigt sein kann, der durch einen dritten Durchgang (17) und einen ersten Durchgang (14) oder einen zweiten Durchgang (15) hindurchtritt.

8. Anhänger (1) nach einem der vorhergehenden Ansprüche, wobei der Abstand zwischen dem ersten Befestigungspunkt (9) und dem zweiten Befestigungspunkt, in Längsrichtung (L) betrachtet, mindestens 15 % des Abstandes zwischen der Vorderseite und der Rückseite der Deichsel (6) beträgt.

9. Anhänger (1) nach einem der vorhergehenden Ansprüche, **dadurch gekennzeichnet, dass** der Anhänger (1) auf jeder seiner beiden Seiten mindestens zwei hintereinander angeordnete Räder (2) aufweist, die einen gleichen Durchmesser aufweisen.

10. Anhänger (1) nach einem der vorhergehenden Ansprüche, wobei der Anhänger (1) an der Vorderseite der Deichsel mit einer Auflaufbremse bereitgestellt ist.

11. Anhänger (1) nach einem der vorhergehenden Ansprüche, wobei der Anhänger (1) zwei oder mehr Räder (2) aufweist, die das Fahrgestell (3) tragen, wobei alle Räder (2), die das Fahrgestell (3) tragen, an dem Fahrgestell (3) befestigt sind, wobei die Befestigung aller Räder (2), die das Fahrgestell (3) tragen, an dem Fahrgestell (3) unabhängig von der Befestigungsposition erfolgt.

12. Anhänger (1) nach einem der vorhergehenden Ansprüche, wobei der Anhänger (1) zwei oder mehr Räder (2) aufweist, die das Fahrgestell (3) tragen, wobei alle Räder (2), die das Fahrgestell (3) tragen, eine Drehachse aufweisen, die eine feste Richtung in Bezug auf das Fahrgestell (3) aufweist, wobei diese Richtung senkrecht zur Längsrichtung (L) verläuft.

13. Anhänger nach einem der vorhergehenden Ansprüche, wobei der Anhänger (1) ein Anhänger der Kategorie O1 oder O2 ist.

14. Anhänger nach einem der vorhergehenden Ansprüche, wobei der Winkel zwischen der ersten Richtung (K) in einer Befestigungsposition und der ersten Richtung (K) in der unmittelbar folgenden oder vorhergehenden Befestigungsposition mindestens 0,5° und höchstens 1,5° beträgt.

## Revendications

1. Remorque (1) comprenant une barre d'attelage (6) et un châssis (3), dans laquelle le châssis (3) s'étend dans une direction longitudinale (L), la barre d'attelage (6) étant une barre d'attelage rigide, la barre d'attelage (6) présentant un côté avant et un côté arrière, la barre d'attelage (6) s'étendant depuis son côté arrière jusqu'à son côté avant dans une première direction (K), la barre d'attelage (6) et le châssis (3) étant conçus pour fixer la barre d'attelage (6) de manière immobile et amovible au châssis (3) dans deux ou plusieurs positions de fixation, dans lesdites différentes positions de fixation, l'angle (a) entre la première direction (K) et la direction longitudinale (L), dans une vue latérale horizontale, étant différent, la barre d'attelage (6) et le châssis (3) étant conçus pour fixer la barre d'attelage (6) de manière immobile et amovible au châssis (3) dans les deux ou plusieurs positions de fixation de façon à ce que la barre d'attelage (6) et le châssis (3) sont conçus pour être fixés l'un à l'autre sur un premier point de fixation (9) et sur un second point de fixation, le premier point de fixation (9) étant plus proche du côté avant de la barre d'attelage que le second point de fixation, la barre d'attelage (6) et le châssis (3) au niveau de l'emplacement du second point de fixation étant fournis avec des éléments d'accouplement (11,12) pour la fixation amovible de la barre d'attelage (6) au châssis (3) au niveau de l'emplacement du second point de fixation dans deux ou plusieurs positions verticales, la barre d'attelage (6) et le châssis (3) au niveau du premier point de fixation (9) étant conçus pour être fixés l'un à l'autre dans une position verticale fixe, **caractérisée en ce que** la barre d'attelage (6) ou le châssis (3) au niveau de l'emplacement du premier point de fixation (9) est fourni(e) avec une surface (21) qui est convexe, dans une vue en coupe verticale dans la direction longitudinale (L), le châssis (3) ou la barre d'attelage (6) au niveau de l'emplacement du premier point de fixation (9) étant fourni(e) avec une surface (24) qui est concave, dans une vue en coupe verticale dans la direction longitudinale (L), le châssis (3) étant fourni avec la surface concave (24) et la barre d'attelage (6) étant fournie avec la surface convexe (21), ou vice versa, la surface convexe (21) et la surface concave (24) se faisant face et étant de forme complémentaire.

2. Remorque (1) selon la revendication 1, dans laquelle la surface convexe (21) est dirigée vers le haut et la surface concave (24) est dirigée vers le bas, ou vice versa, la surface convexe (21) et la surface concave (24) étant fournies avec des passages pour un boulon (10) pour ainsi raccorder la barre d'attelage (6) au châssis (3) au niveau de l'emplacement de la surface convexe (21) et de la surface concave (24).

3. Remorque (1) selon la revendication 1 ou 2, dans laquelle la surface convexe (21) et la surface concave (24) ont un rayon de courbure (R), dans une vue en coupe transversale, qui est d'au moins 3 cm and qui est d'au plus 50 cm.

4. Remorque (2) selon l'une quelconque des revendications précédentes, dans laquelle la surface convexe (21) et la surface concave (24) sont formées par la barre d'attelage (6) ou par le châssis (3) ou par un ou plusieurs adaptateurs (28) disposés sur ou sous la barre d'attelage (6) ou le châssis (3).

5. Remorque (1) selon l'une quelconque des revendications précédentes, dans laquelle lesdits éléments d'accouplement (11, 12) comprennent un premier élément d'accouplement (11) et comprennent un second élément d'accouplement complémentaire (12), le premier élément d'accouplement (11) étant fourni avec un ou plusieurs premiers passages (14) et un ou plusieurs deuxièmes passages (15), le ou les premiers passages (14) et les ou les deuxièmes passages (15) étant disposés à une première distance verticale (B) les uns des autres, le second élément d'accouplement (12) étant fourni avec un ou plusieurs passages (17), le ou les premiers passages (14) et le ou les deuxièmes passages (15) et le ou les troisièmes passages (17) étant conçus pour permettre le passage d'un boulon (18), dans une première orientation mutuelle du premier élément d'accouplement (11) et du second élément d'accouplement (12), le ou les premiers passages (14) et un ou plusieurs des troisièmes passages (17) étant alignés les uns avec les autres, mais le ou les deuxièmes passages (15) n'étant pas alignés avec un troisième passage (17), dans une seconde orientation mutuelle du premier élément d'accouplement (11) et du second élément d'accouplement (12), le ou les premiers passages (15) et un ou plusieurs des troisièmes passages (17) étant alignés les uns avec les autres, mais le ou les premiers passages (14) n'étant pas alignés avec un troisième passage (17), le premier élément d'accouplement (11) étant fixé à la barre d'attelage (6) et le second élément d'accouplement (12) étant fixé au châssis (3), ou vice versa.

6. Remorque (1) selon la revendication 5, dans laquelle le second élément d'accouplement (12) est fourni avec au moins deux desdits troisièmes passages (17) qui sont disposés à une seconde distance verticale les uns des autres, la seconde distance verticale (0,5 * B) étant la moitié de la première distance verticale (B).

7. Remorque (1) selon la revendication 5 ou 6, dans laquelle le premier élément d'accouplement (11) est fixé à la barre d'attelage (6) et le second élément d'accouplement (12) est fixé au châssis (3), le ou les premiers passages (14) et le ou les deuxièmes passages (15) et le ou les troisièmes passages (17) étant conçus pour permettre le passage d'un boulon (18) dans une direction perpendiculaire à la direction longitudinale (L), un des éléments d'accouplement (11) étant bifurqué et pouvant être placé de façon à chevaucher l'autre élément d'accouplement (12) dans différentes positions verticales et pouvant être fixé à l'autre élément d'accouplement (12) au moyen d'un boulon (18) passant à travers un troisième passage (17) et un premier passage (14) et un deuxième passage (15).

8. Remorque (1) selon l'une quelconque des revendications précédentes, dans laquelle la distance entre le premier point de fixation (9) et le second point de fixation, dans une vue en une direction longitudinale (L), est d'au moins 15 % de la distance entre le côté avant et le côté arrière de la barre d'attelage (6).

9. Remorque (1) selon l'une quelconque des revendications précédentes, dans laquelle la remorque (1), sur chacun de ses deux côtés, présente au moins deux roues (2), de diamètre égal, placées l'une derrière l'autre.

10. Remorque (1) selon l'une quelconque des revendications précédentes, dans laquelle la remorque (1) est fournie avec un frein d'embrayage au niveau du côté avant de la barre d'attelage.

11. Remorque (1) selon l'une quelconque des revendications précédentes, dans laquelle la remorque (1) présente deux ou plusieurs roues (2) qui soutiennent le châssis (3), toutes les roues (2) qui soutiennent le châssis (3) étant fixées au châssis (3), la fixation au châssis (3) de toutes les roues (2) qui soutiennent le châssis (3) étant indépendante de ladite position de fixation.

12. Remorque (1) selon l'une quelconque des revendications précédentes, dans laquelle la remorque (1) présente deux ou plusieurs roues (2) qui soutiennent le châssis (3), toutes les roues (2) qui soutiennent le châssis (3) ayant un axe de rotation qui a une direction fixe par rapport au châssis (3), cette direction étant perpendiculaire à la direction longitudinale (L).

13. Remorque selon l'une quelconque des revendications précédentes, dans laquelle la remorque (1) est une remorque de catégorie O1 ou O2.

14. Remorque selon l'une quelconque des revendications précédentes, dans laquelle l'angle entre la première direction (K) dans une position de fixation et la première direction (K) dans la position de fixation suivante ou précédente est d'au moins 0,5° et d'au plus 1,5°.
